# EUROPEAN PATENT APPLICATION

(11) **EP 4 195 617 A1**
(43) Date of publication of application: **14.06.2023**
(21) Application number: 20950828.2
(22) Date of filing: 28.08.2020
(51) Int. Cl.: H04L 49/15, H04L 49/25

(54) **MULTI-CHIP PACKAGING STRUCTURE AND SWITCH**

(71) Applicant: Huawei Technologies Co., Ltd., Shenzhen, Guangdong 518129 (CN)
(72) Inventor: DU, Wenhua, Shenzhen, Guangdong 518129 (CN); ZHANG, Fan, Shenzhen, Guangdong 518129 (CN); LIU, Yongzhi, Shenzhen, Guangdong 518129 (CN)
(74) Representative: Maiwald GmbH
(86) International application number: PCT/CN2020/112293
(87) International publication number: WO 2022/041158

(57) **Abstract**

Embodiments of this application provide a multi-die package structure and a switch, and relate to a multi-die package structure and a switch, to resolve a problem that production costs are high because switch dies with corresponding switch capacities need to be produced for switches with different exchange capabilities. The multi-die package structure includes a package substrate and a plurality of switch dies disposed on the package substrate. The switch die includes at least two network interfaces and at least one die-to-die D2D interface. The switch die is configured to: access a network by using the at least two network interfaces, and send data to or receive data from the network. The switch die is further configured to: be connected to one another switch die by using each D2D interface in the at least one D2D interface, and send data to or receive data from the another switch die. The switch die is further configured to forward, to at least one interface in the at least two network interfaces and the at least one D2D interface, data received from the at least two network interfaces or the at least one D2D interface.

## Description

### TECHNICAL FIELD

This application relates to the field of die technologies, and in particular, to a multi-die package structure and a switch.

### BACKGROUND

A switch (switch) is a network device configured to forward an electrical signal or an optical signal. A plurality of interfaces are disposed on the switch, and data may be transmitted by using any interface in the plurality of interfaces. A most common switch is an Ethernet switch that transmits data based on the Ethernet. The interface of the switch can be directly connected to a host. In the switch, a plurality of pairs of interfaces may be connected at the same time, so that data is transmitted between each pair of mutually communicating hosts without collision.

A switch die is configured in the switch. A data exchange capability of the switch may determine a switch capacity of the switch die. A larger switch capacity of the switch die indicates a higher data exchange capability of the switch, a larger quantity of ports that can be disposed in the switch, and a larger quantity of hosts connected to the switch. However, exchange capabilities of switches required by different types of users are different. In this case, switch dies with corresponding switch capacities need to be produced based on requirements of different users. This is not conducive to reducing production costs.

### SUMMARY

Embodiments of this application provide a multi-die package structure and a switch, to resolve a problem that production costs are high because switch dies with corresponding switch capacities need to be produced for switches with different exchange capabilities.

To achieve the foregoing objective, the following technical solutions are used in this application.

According to an aspect of the embodiments of this application, a multi-die package structure is provided. The multi-die package structure includes a package substrate and at least a plurality of switch dies disposed on the package substrate. The switch die includes at least two network interfaces and at least one die-to-die D2D interface. The switch die is configured to: access a network by using the at least two network interfaces, and send data to or receive data from the network. The switch die is further configured to: be connected to one another switch die by using each D2D interface in the at least one D2D interface, and send data to or receive data from the another switch die. The switch die is further configured to forward, to at least one interface in the at least two network interfaces and the at least one D2D interface, data received from the at least two network interfaces or the at least one D2D interface. In this case, when one switch die is disposed in a switch, a switch bandwidth of the switch die is an actual switch bandwidth of the switch. In this case, the D2D interface of the switch die may be in an idle state, and is not electrically connected to another die. When a plurality of switch dies whose switch bandwidths are the same and that can be electrically connected sequentially from head to tail by using respective D2D interfaces are disposed in a switch, an actual switch bandwidth of the switch is a sum of the switch bandwidths of the switch dies inside the switch. In this way, in the solution provided in this embodiment of this application, to obtain switches with different switch bandwidths, corresponding switch dies do not need to be separately produced for different switch bandwidths. Instead, only one type of switch die needs to be produced, and a quantity of switch dies in the switch is set based on a switch bandwidth requirement of the switch. In addition, a plurality of switch dies with a same switch bandwidth are electrically connected by using respective D2D interfaces, so that a series of switches with different switch bandwidths can be obtained, to reduce costs. In addition, in a same multi-die package structure, D2D interfaces of all switch dies are electrically connected sequentially one by one. In this way, a switch bandwidth of the multi-die package structure may be a sum of switch bandwidths of all switch dies in the multi-die package structure, so that a switch bandwidth of the entire switch can be larger, for example, can reach 50 Tbps, 100 Tbps, or even a larger value.

Optionally, the switch die further includes control logic, and the control logic is used to: obtain destination information of received data from the received data; then determine a sending port based on the destination information, where the sending port includes the at least one D2D interface and the at least two network interfaces in the current switch die; and send the received data by using the sending port. Therefore, the switch die can implement a data forwarding process and a data exchange process.

Optionally, the plurality of switch dies include a source switch die and a destination switch die. After the source switch die determines the sending port based on the destination information, the control logic of the source switch die is further used to: determine at least one sending path between the source switch die and the destination switch die, queue and buffer the received data, and send a scheduling request to the destination switch die. In addition, before the destination switch die sends the received data by using the sending port, the control logic of the destination switch die is further used to: generate a scheduling result based on the scheduling request and a bandwidth of the destination switch die; and the control logic of the source switch die is further used to: dequeue the received data from a queue based on the scheduling result, and send the received data to the destination switch die by using the at least one sending path. In this way, the plurality of switch dies may send a scheduling request to each other, generate a scheduling result, and send data to each other based on the scheduling result, to exchange data between the plurality of switch dies that are electrically connected.

Optionally, the multi-die package structure includes four switch dies. Each switch die includes two D2D interfaces configured to be separately connected to D2D interfaces of two other switch dies. The four switch dies are electrically connected sequentially one by one. In this way, two switch dies that are electrically connected to each other are adjacent to each other. Therefore, a length of a metal lead that is used to electrically connect the two adjacent switch dies may not be very large, so that signal transmission efficiency can be improved.

Optionally, the source switch die is adjacent to the destination switch die. The control logic of the source switch die is specifically used to: determine one sending path, and send the received data to the destination switch die by using the sending path, where the sending path includes a path from the source switch die to the destination switch die. In this way, data may be forwarded between adjacent switch dies by using the foregoing sending path.

Optionally, in the four switch dies, the source switch die and the destination switch die are spaced apart by one intermediate switch die. The control logic of the source switch die is specifically used to: determine one sending path, and send the received data to the destination switch die by using the sending path, where the sending path includes a path from the source switch die to the destination switch die through the intermediate switch die. In this way, data may be forwarded, by using the foregoing first sending path, between two switch dies that are spaced apart.

Optionally, in the four switch dies, the source switch die and the destination switch die are spaced apart by a first intermediate switch die in a first direction, and the source switch die and the destination switch die are spaced apart by a second intermediate switch die in a second direction, where the first direction is opposite to the second direction. The control logic of the source switch die is specifically used to: determine a first sending path, and send a part of the received data to the destination switch die by using the first sending path, where the first sending path includes a path from the source switch die to the destination switch die through the first intermediate switch die; and determine a second sending path, and send another part of the received data to the destination switch die by using the second sending path, where the second sending path includes a path from the source switch die to the destination switch die through the second intermediate switch die. In this way, data transmission directions on the first sending path and the second sending path are opposite. Therefore, when data is forwarded between switch dies that are not adjacent to each other in the switch, traffic of a part of data may be transmitted along the first sending path, and traffic of another part of data may be forwarded along the second sending path, to improve data transmission efficiency.

Optionally, the switch die further includes a switch buffer unit and a transmission link. The switch buffer unit is configured to execute the foregoing control logic of sending a scheduling request, generating a scheduling result, and sending data based on the scheduling result. The transmission link is electrically connected to the D2D interface and the switch buffer unit, and the transmission link is configured to send/receive data between the D2D interface and the switch buffer unit and between different D2D interfaces. Data exchanged between the plurality of switch dies may be transmitted by using the transmission link.

Optionally, the transmission link includes a first link and a second link. The first link includes a first receive-end media access control MAC interface, a first buffer, and a first transmit-end MAC interface that are electrically connected sequentially. The first receive-end MAC interface and the first transmit-end MAC interface are separately electrically connected to the two D2D interfaces of the switch die. The first receive-end MAC interface and the first buffer are further electrically connected to the switch buffer unit. In this way, the first receive-end MAC interfaces and the first transmit-end MAC interfaces of the plurality of switch dies in the switch are electrically connected sequentially, so that the first links of the plurality of switch dies can be electrically connected, and data of the plurality of switch dies can be transmitted in different switch dies by using the first link. In addition, data buffered in the first buffer may be queued in the first buffer in a FIFO manner, and sent to the first transmit-end MAC interface of the switch die, to avoid a conflict between data from the first receive-end MAC interface and data from an egress buffer processing unit. In addition, a transmission direction of data in the second link is opposite to a transmission direction of data in the first link. The second link includes a second receive-end MAC interface, a second buffer, and a second transmit-end MAC interface that are electrically connected sequentially. The second receive-end MAC interface and the second transmit-end MAC interface are separately electrically connected to the two D2D interfaces of the switch die. The second receive-end MAC interface and the second buffer are further electrically connected to the switch buffer unit. Technical effects of the second link and the second buffer can be obtained similarly, and details are not described herein again. In addition, the transmission direction of the data in the second link is opposite to the transmission direction of the data in the first link. Therefore, when data is forwarded between switch dies that are not adjacent to each other in the switch, traffic of a part of data may be transmitted along the first link, and traffic of another part of data may be forwarded along the second link, to improve data transmission efficiency.

Optionally, the four switch dies are arranged in a form of a 2×2 matrix. In the multi-die package structure, the first links of the four switch dies are electrically connected sequentially one by one in a ring shape. In this way, one switch die may be electrically connected to another switch die on each of the left (or right) and the top (or bottom) of the switch die by using the first link and the second link. Two switch dies that are electrically connected to each other are adjacent to each other. Therefore, a length of a metal lead that is used to electrically connect the two adjacent switch dies may not be very large, so that signal transmission efficiency can be improved.

Optionally, the switch die further includes a forwarding processing unit, a third receive-end MAC interface, and a third transmit-end MAC interface. The forwarding processing unit is configured to execute the foregoing control logic of forwarding data, for example, obtain a destination address of data from the network interface based on a source address of the data, and write the data into the switch buffer unit. When the switch die performs layer-2 forwarding, the forwarding processing unit may read a source MAC address in a packet header, then read a destination MAC address in the packet header, and search a MAC address table for an interface corresponding to the destination MAC address. Alternatively, when the switch die performs layer-3 forwarding, the forwarding processing unit may read a source IP address in a packet header, then read a destination IP address in the packet header, and search an IP address table for an interface corresponding to the destination MAC address. In addition, the forwarding processing unit is electrically connected to the network interface and the switch buffer unit. The forwarding processing unit is configured to: read data from the switch buffer unit, and send the data to the network interface. When the switch die performs layer-3 forwarding, the forwarding processing unit needs to change the source MAC address and the destination MAC address in the packet header, to complete layer-2 encapsulation. The third receive-end MAC interface is electrically connected to the network interface and the forwarding processing unit, and is configured to transmit data from the network interface to the forwarding processing unit. The third transmit-end MAC interface is electrically connected to the network interface and the forwarding processing unit, and is configured to transmit data from the forwarding processing unit to the network interface.

Optionally, in the multi-die package structure, switch bandwidths of any two switch dies are the same. In this way, only one type of switch die needs to be produced, and a quantity of switch dies in the switch is set based on a switch bandwidth requirement of the switch. In addition, a plurality of switch dies with a same switch bandwidth are electrically connected by using respective D2D interfaces, so that a series of switches with different switch bandwidths can be obtained, to reduce costs.

Optionally, the multi-die package structure further includes a plurality of optical modules that are disposed on the package substrate and that are on a same side as the switch die. In this way, the optical module and the switch die are packaged in a same multi-die package structure, so that the switch can have an optical interface with a larger switch bandwidth.

Another aspect of the embodiments of this application provides a switch. The switch includes a circuit board and any multi-die package structure disposed on the circuit board. The switch has same technical effects as the switch die provided in the foregoing embodiment, and details are not described herein again.

Still another aspect of the embodiments of this application provides a switch. The switch includes a circuit board and at least two multi-die package structures disposed on the circuit board. D2D interfaces of all switch dies on the circuit board are electrically connected sequentially one by one. The switch has same technical effects as the switch die provided in the foregoing embodiment, and details are not described herein again.

Optionally, on a same circuit board, switch bandwidths of any two switch dies are the same. In this way, a switch bandwidth of the switch may be a sum of switch bandwidths of all switch dies in the switch, so that the switch bandwidth of the entire switch can be larger, for example, can reach 50 Tbps, 100 Tbps, or even a larger value.

### BRIEF DESCRIPTION OF DRAWINGS

FIG. 1 is a schematic diagram of a structure of a switch network according to an embodiment of this application;
FIG. 2 is a schematic diagram of a structure of the switch in FIG. 1;
FIG. 3a is a schematic diagram of a structure of the multi-die package structure in FIG. 2;
FIG. 3b is a schematic diagram of another structure of the multi-die package structure in FIG. 2;
FIG. 4 is a schematic diagram of another structure of the multi-die package structure in FIG. 2;
FIG. 5 is a schematic diagram of another structure of the switch in FIG. 1;
FIG. 6 is a schematic diagram of another structure of the multi-die package structure in FIG. 2;
FIG. 7 is a schematic diagram of another structure of the multi-die package structure in FIG. 2;
FIG. 8 is a schematic diagram of a structure of a switch die according to an embodiment of this application;
FIG. 9 is a schematic diagram of another structure of a switch die according to an embodiment of this application;
FIG. 10a is a schematic diagram of a structure in which a plurality of switch dies shown in FIG. 9 are electrically connected;
FIG. 10b is a schematic diagram of another structure in which a plurality of switch dies shown in FIG. 9 are electrically connected; and
FIG. 11 is a flowchart of forwarding data by a switch according to an embodiment of this application.

Reference numerals:
01-switch network; 10-switch; 11-electronic device; 101-Ethernet interface; 20-multi-die package structure; 201-package substrate; 12-circuit board; 202-switch die; 30-network interface; 31-D2D interface; 100-ring bus; 203-optical engine; 40-SWB; 41-transmission link; 401-IB; 402-EB; 411-first link; 412-second link; 51-first buffer; and 52-second buffer.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly indicate or implicitly include one or more such features.

In addition, in this application, direction terms such as "top", "bottom", "left", and "right" are defined relative to a schematic disposition direction of a component in the accompanying drawings. It should be understood that these direction terms are relative concepts, are used for relative description and clarification, and may be correspondingly changed based on a change of the disposition direction of the component in the accompanying drawings.

In this application, unless otherwise specified and limited, the term "connection" should be understood broadly. For example, the term "connection" may be a fixed connection, a detachable connection, or an integrated connection, or may be a direct connection or an indirect connection by using an intermediate medium. In addition, the term "electrical connection" may be a direct electrical connection, or may be an indirect electrical connection by using an intermediate medium.

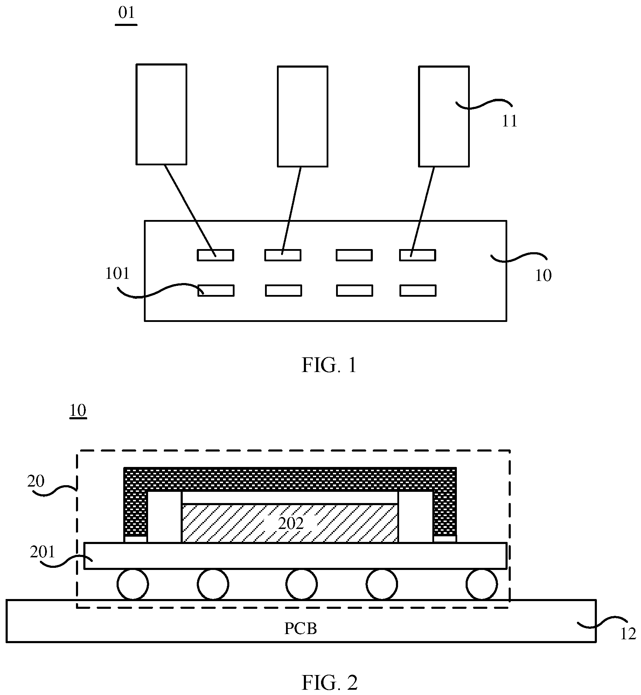

As shown in FIG. 1, a switch network 01 provided in an embodiment of this application may include at least one switch 10 and a plurality of electronic devices 11 that are electrically connected to the switch. The electronic device 11 may be a server, a computer, a mobile terminal, a data storage apparatus, a network component, a network apparatus, a router, a switch, or the like. Each electronic device 11 in the switch network 01 may be electrically connected to one or more Ethernet interfaces 101 of the switch 10 by using an Ethernet (Ethernet) transmission line. In this case, the switch 10 may provide packet forwarding between a plurality of physical Ethernet interfaces 101, so that the electronic devices 11 in the switch network 01 can be electrically connected to each other by using the switch 10, and communicate with each other.

As shown in FIG. 2, the switch 10 provided in this embodiment of this application may include a circuit board 12 such as a printed circuit board (printed circuit board, PCB) and at least one die package (package) structure 20 disposed on the circuit board 12. The multi-die package structure 20 may include a package substrate (substrate) 201 and at least one switch die (die or chiplet) 202 disposed on the package substrate 201.

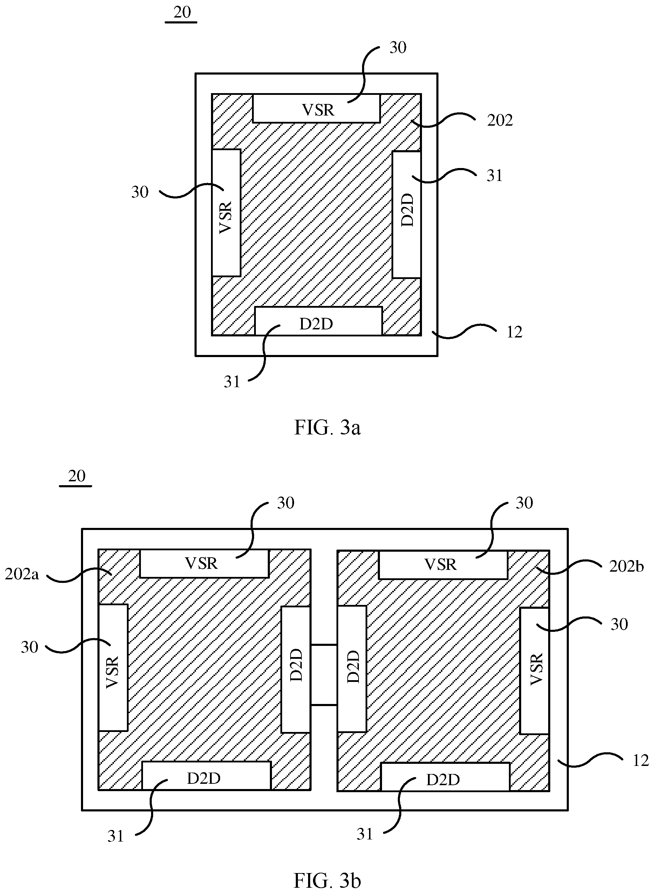

In this embodiment of this application, as shown in FIG. 3a, any switch die 202 in the multi-die package structure 20 may include at least two network interfaces 30 and at least one die-to-die (die-to-die, D2D) interface 31. The network interface 30 and the D2D interface 31 are used as physical layer interfaces of an open system interconnection reference model (open system interconnection reference model, OSI model).

The switch die 202 is configured to: access a network (for example, the Ethernet) by using the at least two network interfaces 30, and send data to or receive data from the network. For example, the network interface 30 may be electrically connected to the physical Ethernet interface 101 shown in FIG. 1, and the network interface 30 may receive data sent by each electronic device 11 in the Ethernet. Alternatively, the network interface 30 may send data to each electronic device 11.

For example, the network interface 30 may be a serializer-deserializer (serializer-deserializer, SerDes) interface. For example, the network interface 30 may be a very short reach (very short reach, VSR) interface that is in the SerDes interface and that is configured to connect a die to a pluggable optical module. For ease of description, in the accompanying drawings, the following uses an example in which the VSR interface is used as the network interface.

In this embodiment of the present invention, one switch die 202 may include at least one D2D interface 31 and at least two network interfaces 30. One switch die 202 is connected to one another switch die by using each D2D interface 31 in the at least one D2D interface 31, and is separately connected to two Ethernet interfaces 101 of the switch 10 by using the two network interfaces 30. The switch die 202 is configured to: be connected to one another switch die 202 by using each D2D interface 31 in the at least one D2D interface 31, and send data to or receive data from the another switch die. In addition, the switch die 202 is further configured to forward, to at least one interface in the at least two network interfaces 30 and the at least one D2D interface 31, data received from the at least two network interfaces 30 or the at least one D2D interface 31.

For ease of description, the following uses an example in which one switch die 202 includes one D2D interface 31 and two network interfaces 30. In this case, data from different network interfaces 30 may be exchanged with another switch die 202 by using the D2D interface 31, and data may be sent to or received from an external network by using ports of at least two receivers.

It may be learned that the D2D interface 31 may be configured to electrically connect two switch dies 202, that is, die to die. In this embodiment of this application, the D2D interface 31 may be a SerDes interface. For example, the D2D interface may be an extreme short reach (extreme short reach, XSR) interface that is in the SerDes interface and that is configured to implement an electrical connection between dies. A cabling length that is between the XSR interfaces and that is produced on the PCB 12 may be 0 mm to 50 mm. Alternatively, the D2D interface 31 may be a parallel interface such as an advanced interface bus (advanced interface bus, AIB).

Based on this, the switch die 202 provided in this embodiment of this application may include a processor, and a forwarding processing unit in the processor may be configured to execute control logic. The control logic is used to obtain, from data received from the network interface 30 or the D2D interface 31, destination information of the received data. For example, the destination information may be a destination address of the received data. Then, the control logic may be used to determine a sending port based on the destination information. The transmit port includes the at least one D2D interface 31 and the at least two network interfaces 30 in the current switch die. Next, the control logic is further used to send the received data by using the sending port, to implement a data forwarding process.

It should be noted that, in this embodiment of this application, when a plurality of switch dies 202 are packaged in the die package structure 20, the die package structure 20 may be a multi-chip module (multi-chip module, MCM) structure in which a plurality of switch dies 202 are directly disposed on the package substrate (substrate). Alternatively, the die package structure 20 may be a 2.5D package structure in which a plurality of switch dies 202 are disposed on an interposer (interposer) by using a package (chip on wafer on substrate, COWOS) technology including a silicon interposer. Alternatively, in some other embodiments, the die package structure 20 may be a fan-out package structure in which a plurality of switch dies 202 are disposed at a redistribution layer (redistribution layer, RDL) by using a fan-out package (fan out package, FOP) technology. Alternatively, the die package structure 20 may be an embedded multi-die interconnect bridge (embedded multi-die interconnect bridge, EMIB) package structure in which a connector is disposed on the package substrate and a plurality of switch dies 202 disposed on the package substrate are electrically connected by using the connector.

Based on this, when the switch 10 includes at least two switch dies, for example, a switch die 202a and a switch die 202b shown in FIG. 3b, switch bandwidths of any two switch dies on a same PCB 12 may be the same, for example, are both 12.8 Tpbs. The following describes, by using an example, a manner of disposing the plurality of switch dies 202 in the switch 10 based on different switch bandwidth requirements of the switch 10.

It should be noted that, in this application, a switch bandwidth of the switch 10 is used to measure a total data exchange capability of the switch 10. For example, when the switch bandwidth of the switch 10 is 50 Tbps, a data transmission rate of the switch 10 is 50 megabits per second.

### Example 1

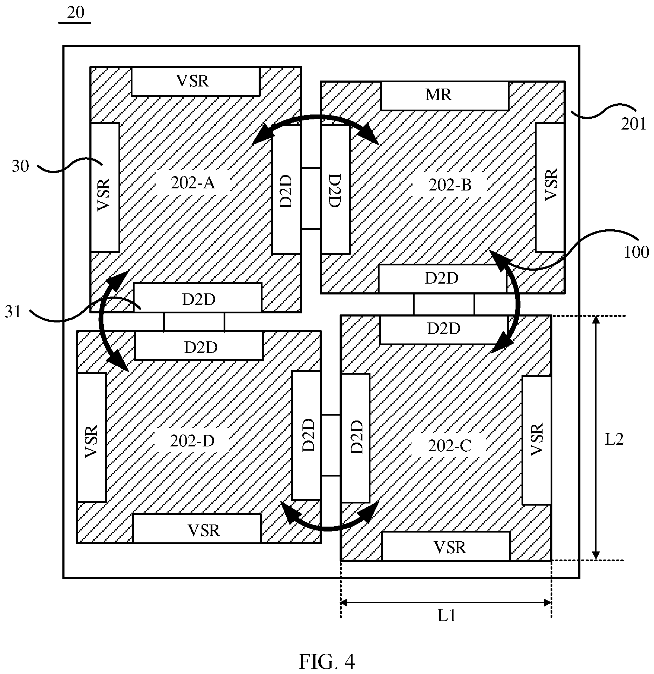

In this example, a preset switch bandwidth of the switch 10 is 50 Tbps. The switch 10 may include one multi-die package structure 20 shown in FIG. 4. In this case, the multi-die package structure 20 may include four switch dies located on a same package substrate 201: a switch die 202-A, a switch die 202-B, a switch die 202-C, and a switch die 202-D.

In this case, to enable an actual switch bandwidth of the switch 10 to reach the preset switch bandwidth (for example, 50 Tbps), the switch die 202-A, the switch die 202-B, the switch die 202-C, and the switch die 202-D in the multi-die package structure 20 each may be a die whose switch bandwidth is 12.8 Tbps and that is produced by using a 7 nm (a minimum conductor width of a transistor in the die) die production process.

Based on this, D2D interfaces 31 of the switch die 202-A, the switch die 202-B, the switch die 202-C, and the switch die 202-D in the multi-die package structure 20 are electrically connected sequentially one by one to form a ring bus 100. For example, the D2D interface 31 of the switch die 202-A is electrically connected to the D2D interface 31 of the switch die 202-B. The D2D interface 31 of the switch die 202-B is electrically connected to the D2D interface 31 of the switch die 202-C. The D2D interface 31 of the switch die 202-C is electrically connected to the D2D interface 31 of the switch die 202-D.

In some embodiments of this application, when a source switch die configured to send data is adjacent to a destination switch die configured to receive data, for example, the switch die 202-A used as a source switch die may directly send data to the switch die 202-B used as a destination switch die. Alternatively, in some other embodiments of this application, when a source switch die and a destination switch die are spaced apart by an intermediate switch die, for example, when the switch die 202-A used as a source switch die sends data to the switch die 202-C used as a destination switch die, the data sent by the switch die 202-A may be transmitted to the switch die 202-C in a clockwise direction after passing through the switch die 202-B used as a first intermediate switch die. Alternatively, the data sent by the switch die 202-A may be transmitted to the switch die 202-C in a counterclockwise direction after passing through the switch die 202-D used as a second intermediate switch die. Alternatively, a part of the data sent by the switch die 202-A used as a source switch die may be transmitted to the switch die 202-C in a clockwise direction after passing through the switch die 202-B used as a first intermediate switch die. Another part of the foregoing data may be transmitted to the switch die 202-C in a counterclockwise direction after passing through the switch die 202-D used as a second intermediate switch die.

The D2D interface 31 of any switch die in the switch die 202-A, the switch die 202-B, the switch die 202-C, and the switch die 202-D may be a 128L-112G-XSR interface. The 128L-112G-XSR interface represents 128 lanes (lane) of XSR interfaces, and a data transmission rate of each lane of XSR interface is 112 Gbps. In this way, a unidirectional data transmission bandwidth of a transmission circuit formed between two adjacent D2D interfaces 31 that are electrically connected is 14.3 Tbps (128×112=14.3 Tbps). In this case, the foregoing transmission link may be configured to carry 12.8 Tbps Ethernet traffic of each switch die during unidirectional data transmission such as data receiving or data sending. In addition, the remaining 1.5 Tbps (14.3 Tbps-12.8 Tbps=1.5 Tbps) traffic may be used for internal consumption (over header).

It should be noted that, a packet header of data transmitted between the D2D interfaces 31 of the plurality of switch dies carries an address, and the address needs to occupy some bytes. In addition, in addition to data, a scheduling instruction and a scheduling result that are related to the data further need to be transmitted between the D2D interfaces 31 of the plurality of switch dies. The scheduling instruction and the scheduling result also need to occupy some bytes. Therefore, the foregoing traffic used for internal consumption may be used to transmit the address, the scheduling instruction, and the scheduling result that are related to the data. For example, a margin of traffic transmitted by the D2D interface 31 of each switch die may be about 10% of a switch bandwidth such as 12.8 Tbps of the switch die. The address, the scheduling instruction, and the scheduling result that are related to the data are described in detail in the following embodiments.

However, on the ring bus 100, the D2D interface 31 of any switch die may receive data, and may send data. Therefore, when two adjacent D2D interfaces 31 that are electrically connected simultaneously send or receive data, a bidirectional bandwidth of a formed transmission link is two 14.3 Tbps. In addition, on the ring bus 100, any switch die may be used as a source switch die, and may also be used as a destination switch die. When the four switch dies on the ring bus 100 simultaneously receive and send data, a bandwidth of a transmission link formed on the ring bus 100 may be eight (2×4) 14.3 Tbps. In this case, each D2D interface 31 in the multi-die package structure 20 is in a state of sending/receiving data.

Considering that the bandwidth of the foregoing transmission link formed inside the switch 10 has speedup, a total switch bandwidth actually embodied externally by the switch 10 is a sum of switch bandwidths of the switch dies 202 inside the switch 10, for example, four 14.3 Tbps, namely, a switch bandwidth of 51.2 Tbps (4×14.3=51.2 Tbps), so that the switch 10 has a line-rate non-blocking exchange capability of 51.2 Tbps, and the switch bandwidth is greater than the preset switch bandwidth (for example, 50 Tbps) of the switch 10.

In addition, in this embodiment of this application, a shape of a vertical projection of the switch die 202 on the package substrate 201 or the PCB may be a rectangle or a square. This is not limited in this embodiment of this application. An example in which the shape of the vertical projection of the switch die 202 on the package substrate 201 or the PCB may be a rectangle is used. For example, as shown in FIG. 4, in the multi-die package structure 20, a short side L1 of any switch die in the switch die 202-A, the switch die 202-B, the switch die 202-C, and the switch die 202-D may be 25.5 mm, and a long side L2 thereof may be 27.5 mm. For ease of description below, most embodiments are described by using an example in which the shape of the vertical projection of the switch die on the package substrate 201 or the PCB is a rectangle.

In addition, for example, the network interface 30 of any switch die in the switch die 202-A, the switch die 202-B, the switch die 202-C, and the switch die 202-D may be a 64L-112G-VSR interface or a 128L-112G-VSR interface. The 64L-112G-VSR interface represents 64 lanes of VSR interfaces, and a data transmission rate of each lane of VSR interface is 112 Gbps. In this case, a unidirectional data transmission bandwidth of the network interface 30 is 7.168 Tbps (64×112=7.168 Tbps).

In addition, the 128L-112G-VSR interface represents 128 lanes of VSR interfaces, and a data transmission rate of each lane of VSR interface is 112 Gbps. In this case, a unidirectional data transmission bandwidth of the network interface 30 is 14.3 Tbps (128×112=14.3 Tbps). The unidirectional data transmission bandwidth of the network interface 30 may be set based on traffic transmitted by an electronic device 11 electrically connected to the network interface 30. This is not limited in this application.

### Example 2

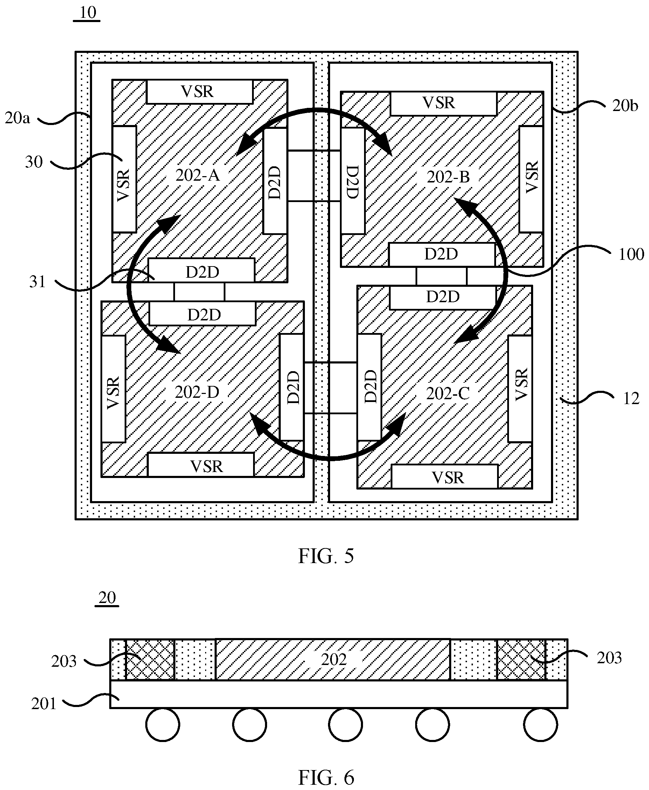

In this example, a preset switch bandwidth of the switch 10 is 50 Tbps. The switch 10 may include two multi-die package structures: a multi-die package structure 20a and a multi-die package structure 20b that are shown in FIG. 5. Each multi-die package structure may include two switch dies. For example, the multi-die package structure 20a includes a switch die 202-A and a switch die 202-D, and the multi-die package structure 20b includes a switch die 202-B and a switch die 202-C.

In addition, switch bandwidths of any two switch dies in each multi-die package structure may be the same. In addition, switch bandwidths of any two switch dies in different multi-die package structures may be the same. In this way, switch bandwidths of all switch dies in the switch 10 may be equal. In this case, the switch die 202-A, the switch die 202-B, the switch die 202-C, and the switch die 202-D each may be a die whose switch bandwidth is 12.8 Tbps and that is produced by using a 7 nm die production process.

In addition, on the circuit board 12 in the switch 10, the D2D interfaces 31 of all the switch dies are electrically connected sequentially from head to tail to form a ring bus 100. For example, the D2D interface 31 of the switch die 202-A in the multi-die package structure 20a is electrically connected to the D2D interface 31 of the switch die 202-B. The D2D interface 31 of the switch die 202-B in the multi-die package structure 20a is electrically connected to the D2D interface 31 of the switch die 202-C in the multi-die package structure 20b. The D2D interface 31 of the switch die 202-C in the multi-die package structure 20b is electrically connected to the D2D interface 31 of the switch die 202-D in the multi-die package structure 20a.

It may be learned from the foregoing descriptions that the preset switch bandwidth of the switch 10 in Example 1 and Example 2 is 50 Tbps, the switch 10 includes four switch dies (the switch die 202-A, the switch die 202-B, the switch die 202-C, and the switch die 202-D), and the switch bandwidth of each switch die is 12.8 Tbps. A difference lies in that in Example 1, all the four switch dies are packaged in a same multi-die package structure 20. In this way, total power consumption of the multi-die package structure may exceed 1000 W, and total power consumption is large. In Example 2, the four switch dies are separately packaged in the multi-die package structure 20a and the multi-die package structure 20b in pairs, so that two switch dies are packaged in each multi-die package structure. This can reduce power consumption of each multi-die package structure by half, for example, to about 500 W.

In conclusion, when one switch die 202 is disposed in the switch 10, a switch bandwidth such as 12.8 Tbps of the switch die 202 is an actual switch bandwidth of the switch 10. In this case, the D2D interface 31 of the switch die 202 may be in an idle state, and is not electrically connected to another die. When a plurality of switch dies 202 whose switch bandwidths are the same and that are electrically connected sequentially one by one by using respective D2D interfaces 31 are disposed in the switch 10, an actual switch bandwidth of the switch 10 is a sum of the switch bandwidths of the switch dies 202 inside the switch 10.

For example, when two switch dies 202 (12.8 Tbps) are disposed in the switch 10, the actual switch bandwidth of the switch 10 is 25.6 Tbps (2×12.8 Tbps). Alternatively, when three switch dies 202 (12.8 Tbps) are disposed in the switch 10, the actual switch bandwidth of the switch 10 is 38.4 Tbps (3×12.8 Tbps). Alternatively, when four switch dies 202 (12.8 Tbps) are disposed in the switch 10, the actual switch bandwidth of the switch 10 is 51.2 Tbps (4×12.8 Tbps).

A manner of disposing another quantity of switch dies 202 in the switch 10 is the same as the foregoing manner, and details are not described herein again. When a plurality of switch dies 202 are disposed in the switch 10, the plurality of switch dies 202 may be packaged in a same multi-die package structure in the manner in Example 1, or may be packaged in different multi-die package structures in the manner in Example 2.

In this way, in the solution provided in this embodiment of this application, to obtain switches 10 with different switch bandwidths, corresponding switch dies do not need to be separately produced for different switch bandwidths. Instead, only one type of switch die 202 (for example, a switch bandwidth is 12.8 Tbps) needs to be produced, and a quantity of switch dies 202 in the switch 10 is set based on a switch bandwidth requirement of the switch 10. Then, a plurality of switch dies 202 with a same switch bandwidth are electrically connected sequentially from head to tail in the foregoing manner, so that a series of switches 10 with different switch bandwidths can be obtained, to reduce costs.

The foregoing uses an example in which the preset switch bandwidth of the switch 10 is 50 Tbps to describe a manner of disposing the switch die 202 in the switch 10. The following uses an example to describe a manner of disposing the switch 10 with another preset switch bandwidth.

### Example 3

In this example, a preset switch bandwidth of the switch 10 is 100 Tbps. The switch 10 may include one multi-die package structure 20. In this case, the multi-die package structure 20 may include four switch dies located on a same package substrate 201: a switch die 202-A, a switch die 202-B, a switch die 202-C, and a switch die 202-D that are shown in FIG. 4.

In this case, to enable an actual switch bandwidth of the switch 10 to reach the preset switch bandwidth (for example, 100 Tbps), the switch die 202-A, the switch die 202-B, the switch die 202-C, and the switch die 202-D in the multi-die package structure 20 each may be a die whose switch bandwidth is 25.6 Tbps and that is produced by using a 5 nm (a minimum conductor width of a transistor in the die) die production process. In this way, a total switch bandwidth of the four 25.6 Tbps switch dies is 4×25.6 Tbps (4×25.6=102.4 Tbps), and may be greater than the preset switch bandwidth (for example, 100 Tbps).

Similarly, the D2D interfaces 31 of the switch die 202-A, the switch die 202-B, the switch die 202-C, and the switch die 202-D in the multi-die package structure 20 are electrically connected sequentially one by one to form a ring bus 100.

In this example, the D2D interface 31 of any switch die in the switch die 202-A, the switch die 202-B, the switch die 202-C, and the switch die 202-D may be a 256L-112G-XSR interface. The 256L-112G-XSR interface represents 256 lanes of XSR interfaces, and a data transmission rate of each lane of XSR interface is 112 Gbps. In this way, a unidirectional bandwidth of a transmission circuit formed between two adjacent D2D interfaces 31 that are electrically connected is 28.6 Tbps (256×112=28.6 Tbps). In this case, the foregoing transmission link may be configured to carry 25.6 Tbps Ethernet traffic of each switch die during data receiving or data sending. In addition, remaining 3 Tbps (28.6 Tbps-25.6 Tbps=3 Tbps) traffic may be used for internal consumption.

In addition, for example, the network interface 30 of any switch die in the switch die 202-A, the switch die 202-B, the switch die 202-C, and the switch die 202-D may be a 128L-112G-VSR interface.

Similarly, all the four switch dies are packaged in a same multi-die package structure 20. In this way, total power consumption of the multi-die package structure 20 may exceed 2000 W, and total power consumption is large. Therefore, to reduce power consumption of a single multi-die package structure, the four switch dies may be separately packaged in two different multi-die package structures in pairs. As described above, two switch dies may be packaged in each multi-die package structure, so that power consumption of each multi-die package structure can be reduced by half, for example, to about 1000 W.

In the foregoing Example 1, Example 2, and Example 3, an example in which only the switch die 202 is packaged in the multi-die package structure 20 is used for description. In some other embodiments of this application, in addition to the switch die 202, another component may be packaged in the multi-die package structure 20. The following describes a multi-die package structure 20 in which another component is packaged and a structure of a switch 10 that has the multi-die package structure 20.

### Example 4

In this example, in at least one multi-die package structure 20 in the switch 10, a switch die 202 shown in FIG. 6 is packaged, and a plurality of optical engines (optical engine, OE) 203 are further packaged. In this case, the plurality of OEs 203 and the switch die 202 are disposed on a same side of the package substrate 201, and signal interconnection may be implemented by using the package substrate 201.

Each OE 203 may be used as at least one optical interface to be connected to an optical fiber. The OE 203 is further configured to: receive an optical signal in the optical fiber, and convert the optical signal into an electrical signal. In addition, the OE 203 receives, by using the package substrate 201, an electrical signal output by the switch die 202, converts the electrical signal into an optical signal, and transmits the optical signal to the foregoing optical fiber, so that the optical signal can be send/received and processed.

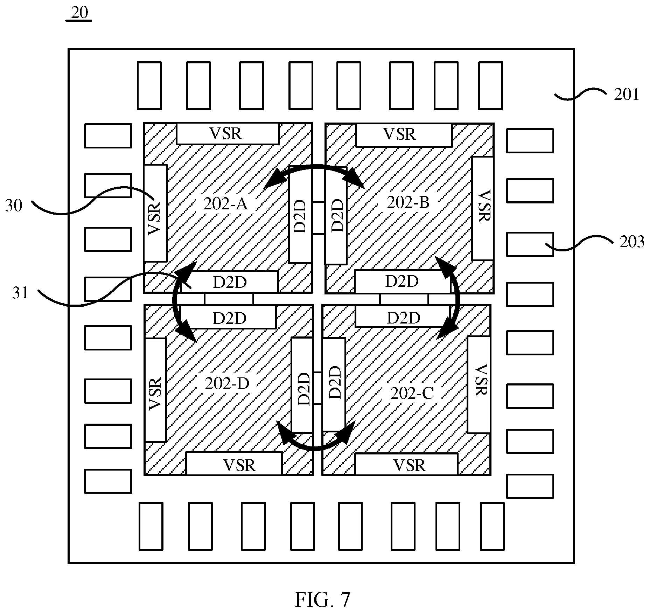

For example, as shown in FIG. 7, a preset switch bandwidth of the switch 10 is 100 Tbps. The switch 10 may include one multi-die package structure 20. Similarly, the multi-die package structure 20 may include four switch dies located on a same package substrate 201: a switch die 202-A, a switch die 202-B, a switch die 202-C, and a switch die 202-D that are shown in FIG. 7. A switch bandwidth of any one of the foregoing switch dies may be 25.6 Tbps. A manner in which the switch die 202-A, the switch die 202-B, the switch die 202-C, and the switch die 202-D are electrically connected sequentially one by one by using respective D2D interfaces 31 is the same as the foregoing manner, and details are not described herein again.

In this example, a shape of a vertical projection of any one of the foregoing switch dies on the package substrate 201 or the PCB may be a square. For example, in the multi-die package structure 20, a side length of any side of any switch die in the switch die 202-A, the switch die 202-B, the switch die 202-C, and the switch die 202-D may be 26 mm.

In addition, in some embodiments of this application, 32 OEs 203 are further packaged in the multi-die package structure 20. When one OE 203 is used as four optical interfaces, and a switch bandwidth of each optical interface is 800 Gbps, a switch bandwidth of one OE 203 is 3.2 Tbps (4×800 Gbps=3.2 Tbps). In this case, the switch 10 may have 128 (32×4=128) optical interfaces whose switch bandwidths are 800 Gbps.

Alternatively, in some other embodiments of this application, 32 OEs 203 are further packaged in the multi-die package structure 20. When one OE 203 is used as eight optical interfaces, and a switch bandwidth of each optical interface is 400 Gbps, a switch bandwidth of one OE 203 is 3.2 Tbps (8×400 Gbps=3.2 Tbps). In this case, the switch 10 may have 128 (32×8=256) optical interfaces whose switch bandwidths are 400 Gbps.

Alternatively, in some other embodiments of this application, 64 OEs 203 are further packaged in the multi-die package structure 20. When one OE 203 is used as four optical interfaces, and a switch bandwidth of each optical interface is 400 G, a switch bandwidth of one OE 203 is 1.6 Tbps (4×400 Gbps=1.6 Tbps). In this case, the switch 10 may have 128 (64×4=256) optical interfaces whose switch bandwidths are 400 Gbps.

It should be noted that, the foregoing description is merely an example of a quantity of OEs 203 packaged in the multi-die package structure 20 and a switch bandwidth thereof, and other examples are not described herein.

It may be learned from the foregoing descriptions that a plurality of switch dies 202 are disposed in the multi-die package structure 20 of the switch 10, and the switch dies 202 in the switch 10 may be electrically connected by using the D2D interface 30, so that the switch bandwidth of the switch 10 can reach 50 Tbps, 100 Tbps, or even a larger value. Currently, an optimal switch bandwidth that can be reached by a switch die produced by using a 7 nm (a minimum conductor width of a transistor in the die) die production process is 25 Tbps. Therefore, the switch 10 provided in this embodiment of this application can obtain a larger switch bandwidth, to help improve performance of the switch 10.

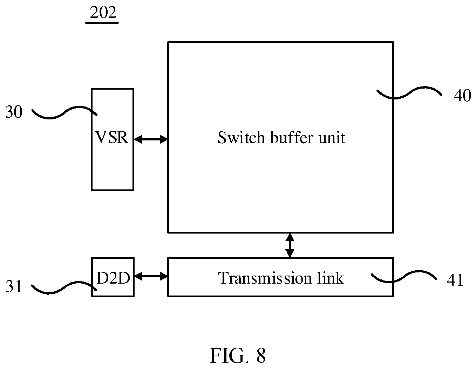

A structure of the switch die 202 in any one of the foregoing embodiments is shown in FIG. 8. The switch die 202 may include a transmission link 41 and a processor configured to execute control logic. The processor includes a switch buffer (switch buffer, SWB) unit 40 shown in FIG. 8.

The transmission link 41 is electrically connected to the D2D interface 31 and the SWB 40, and the transmission link 41 is configured to send/receive data between the D2D interface 31 and the SWB 40 and between different D2D interfaces 31. In this way, data in the SWB 40 of the source switch die may be transmitted to the D2D interface 31 of the source switch die 202 by using the transmission link 41, to be sent to the D2D interface 31 of the destination switch die by using the D2D interface 31. In addition, after the D2D interface 31 of the destination switch die receives data output by the source switch die 202, the data may also be transmitted to the SWB 40 of the destination switch die by using the transmission link 41.

In addition, the SWB 40 is configured to execute the following control logic. For example, after the source switch die determines the sending port based on the destination information, the control logic executed by the SWB 40 of the source switch die is further used to: determine at least one sending path between the source switch die and the destination switch die, queue and buffer the received data, and send a scheduling request to the destination switch die.

In addition, before the destination switch die sends the received data by using the sending port, the control logic executed by the SWB 40 of the destination switch die is further used to generate a scheduling result based on the scheduling request and a bandwidth of the destination switch die. In addition, the control logic executed by the SWB 40 of the source switch die is further used to: dequeue the received data from a queue based on the scheduling result, and send the received data to the destination switch die by using the at least one sending path.

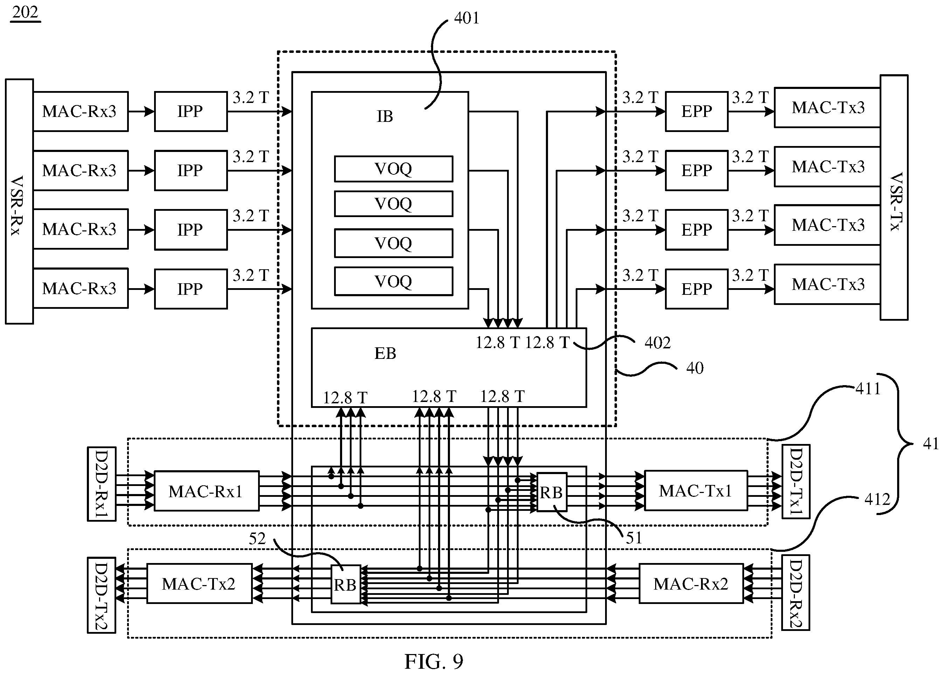

Based on this, as shown in FIG. 9, the SWB 40 may include an ingress buffer (ingress buffer, IB) processing unit 401 and an egress buffer (egress buffer, EB) processing unit 402 that are electrically connected. The IB 401 is electrically connected to the network interface 30. The IB 401 is configured to: determine at least one sending path between the source switch die and the destination switch die, queue and buffer data from the network interface 30 in a virtual output queue (virtual output queue, VOQ) manner, and send a scheduling request to the EB 402 of the destination switch die.

The EB 402 is electrically connected to the transmission link 41 and the network interface 30. The EB 402 is configured to: receive scheduling requests sent by a plurality of source switch dies, generate a plurality of scheduling results based on the bandwidth, and separately send the plurality of scheduling results to the IBs 401 of the plurality of source switch dies. After receiving the foregoing scheduling result, the IB 401 of the source switch die may dequeue a packet from a VOQ queue of the IB 401 based on the scheduling result, and send the received data to the EB 402 of the destination switch die by using the at least one sending path. Based on this, the EB 402 of the target switch die is further configured to buffer data that is from the source switch die and that is to be sent to the network interface 30 of the destination switch die.

In addition, as shown in FIG. 9, the transmission link 41 may include a first link 411 and a second link 412. A transmission direction (a direction shown by an arrow in FIG. 9) of data in the second link 412 is opposite to a transmission direction (a direction shown by an arrow in FIG. 9) data in the first link 411. In addition, in the switch 10, the first links 411 of all the switch dies 202 are electrically connected sequentially one by one, and the second links 412 of all the switch dies 202 are electrically connected sequentially one by one.

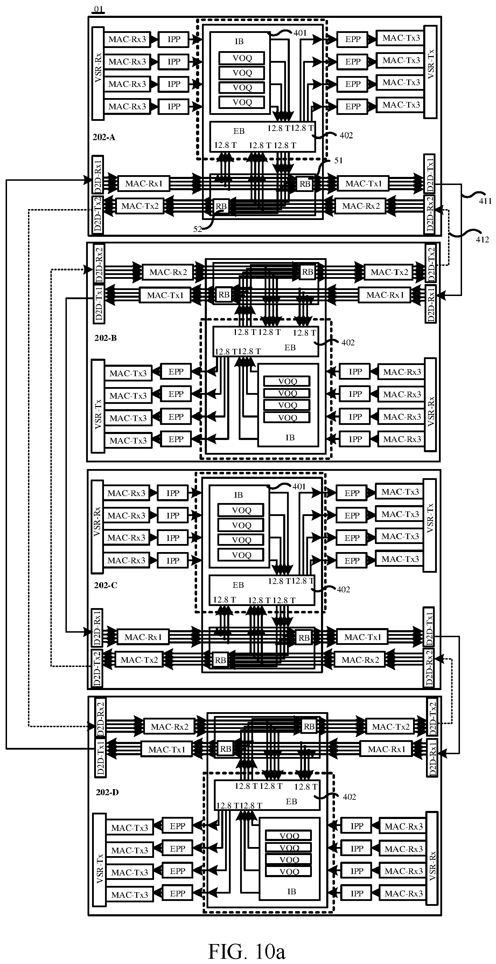

For example, as shown in FIG. 10a, when the switch 10 has four switch dies: a switch die 202-A, a switch die 202-B, a switch die 202-C, and a switch die 202-D that are electrically connected sequentially one by one, the switch die 202-A is a source switch die configured to send data, and the switch die 202-C is a destination switch die configured to receive data, a part of traffic of data sent by the switch die 202-A may be transmitted to the switch die 202-C through the switch die 202-B along an arrow in the first link 411 (a solid-line arrow in FIG. 10a) of each switch die. In addition, another part of traffic of the data sent by the switch die 202-A may be transmitted to the switch die 202-C through the switch die 202-D along an arrow in the second link 412 (a dashed-line arrow in FIG. 10a) of each switch die. Therefore, data transmission efficiency can be improved.

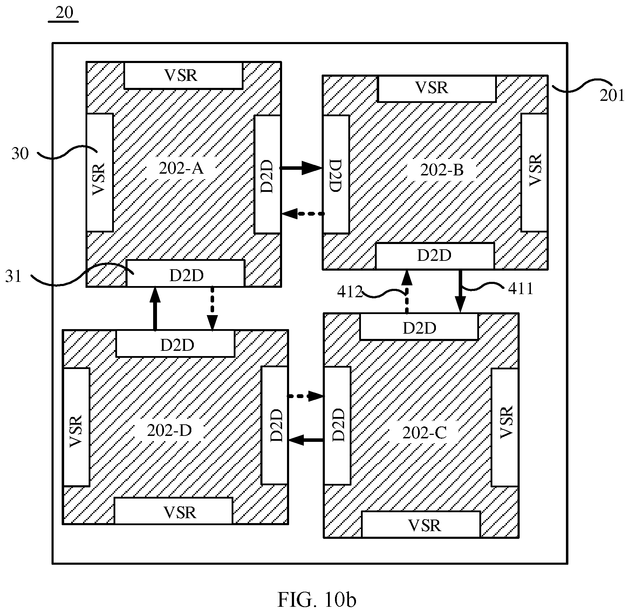

In some embodiments of this application, as shown in FIG. 10b, the foregoing four switch dies in a same multi-die package structure 20, for example, the switch die 202-A, the switch die 202-B, the switch die 202-C, and the switch die 202-D, may be arranged in a form of a 2×2 matrix. The first links 411 (a solid-line arrow in FIG. 10b) of the switch die 202-A, the switch die 202-B, the switch die 202-C, and the switch die 202-D are electrically connected sequentially one by one in a ring shape. The second links 412 (a dashed-line arrow in FIG. 10b) of the switch die 202-A, the switch die 202-B, the switch die 202-C, and the switch die 202-D are electrically connected sequentially one by one in a ring shape.

In this way, one switch die such as the switch die 202-Amay be electrically connected to the switch die 202-B on the left (or right) of the switch die 202-A and the switch die 202-D on the bottom (or top) of the switch die 202-A by using the first link 411 and the second link 412. Two switch dies that are electrically connected to each other, for example, the switch die 202-A and the switch die 202-B (or the switch die 202-D) are adjacent to each other. Therefore, a metal lead (not shown in the figure) that is used to electrically connect the two adjacent switch dies may not be very large, so that signal transmission efficiency can be improved.

For example, as shown in FIG. 9, the first link 411 may include a first MAC interface (briefly referred to as MAC-Rx1 below) and a first transmit-end MAC interface (briefly referred to as MAC-Tx1 below). The MAC-Rx1 is electrically connected to the MAC-Tx1 and the EB 402. In this case, the D2D interface 31 of each switch die 202 may include D2D-Rx1 configured to receive a signal and D2D-Tx1 configured to send a signal, and the D2D-Rx1 and the D2D-Tx1 are electrically connected to the first link 411, as shown in FIG. 9.

Based on this, when the switch 10 includes at least two switch dies, in two adjacent switch dies, for example, as shown in FIG. 10a, the MAC-Rx1 of the switch die 202-B is electrically connected to the MAC-Tx1 of the switch die 202-A by using the D2D interface (for example, the D2D-Rx1) of the switch die 202-B and the D2D interface (for example, the D2D-Tx1) of another switch die such as the switch die 202-A. The MAC-Rx1 of the switch die 202-B is configured to: write data from the D2D interface (for example, the D2D-Rx1) into the EB 402 of the switch die 202-B, or send the data to the MAC-Tx1 of the switch die 202-B.

In addition, as shown in FIG. 10a, the MAC-Tx1 of the switch die 202-B is electrically connected to the EB 402, and is electrically connected to the MAC-Rx1 of the switch die 202-C by using the D2D interface (for example, the D2D-Tx1) of the switch die 202-B and the D2D interface (for example, the D2D-Rx1) of another switch die such as the switch die 202-C. The MAC-Tx1 of the switch die 202-B is further electrically connected to the MAC-Rx1 of the switch die 202-B. Therefore, the MAC-Tx1 of the switch die 202-B is configured to send data from the MAC-Rx1 of the switch die 202-B or the EB 402 of the switch die 202-B to the D2D interface (for example, the D2D-Tx1) of the switch die 202-B.

In addition, it may be learned from the foregoing descriptions that, as shown in FIG. 9, in a same switch die 202, the MAC-Tx1 receives data from the MAC-Rx1 and the EB 402. Therefore, to avoid a conflict between data from the MAC-Rx1 and the EB 402, the first link 411 further includes a first buffer (buffer, BF) 51. The first buffer 51 is electrically connected to the MAC-Rx1, the MAC-Tx1, and the EB 402 of the switch die 202. The first buffer 51 is configured to buffer data that is sent by the MAC-Rx1 and the EB 402 in the same switch die 202 to the MAC-Tx1. In this way, data buffered in the first buffer 51 may be queued in the first buffer 51 in a first in first out (first In first out, FIFO) manner, and sent to the MAC-Tx1.

Similarly, as shown in FIG. 9, the second link 412 may include a second receive-end MAC interface (briefly referred to as MAC-Rx2 below) and a second transmit-end MAC interface (briefly referred to as MAC-Tx2 below). In the same switch die 202, the MAC-Rx2 is electrically connected to the MAC-Tx2 and the EB 402.

It should be noted that the MAC-Rx1 and the MAC-Tx1 in the first link 411 and the MAC-Rx2 and the MAC-Tx2 in the second link 412 may use a standard Ethernet protocol, or may use a customized simplification standard.

In this case, the D2D interface 31 of each switch die 202 may further include D2D-Rx2 configured to receive a signal and D2D-Tx2 configured to send a signal, and the D2D-Rx2 and the D2D-Tx2 are electrically connected to the second link 412, as shown in FIG. 9. Based on this, when the switch 10 includes at least two switch dies, in two adjacent switch dies, for example, as shown in FIG. 10a, the MAC-Rx2 of the switch die 202-B is electrically connected to the MAC-Tx2 of the switch die 202-C by using the D2D interface (for example, the D2D-Rx2) of the switch die 202-B and the D2D interface (for example, the D2D-Tx2) of another switch die such as the switch die 202-C. The MAC-Rx2 of the switch die 202-B is configured to: write data from the D2D interface (for example, the D2D-Rx2) into the EB 402, or send the data into the MAC-Tx2 of the switch die 202-B.

In addition, as shown in FIG. 10a, the MAC-Tx2 of the switch die 202-B is electrically connected to the EB 402, and is electrically connected to the MAC-Rx2 of the switch die 202-A by using the D2D interface (for example, the D2D-Tx2) of the switch die 202-B and the D2D interface (for example, the D2D-Rx2) of another switch die such as the switch die 202-A. The MAC-Tx2 of the switch die 202-B is further electrically connected to the MAC-Rx2 of the switch die 202-B. Therefore, the MAC-Tx2 of the switch die 202-B is configured to send data from the MAC-Rx2 of the switch die 202-B or the EB 402 of the switch die 202-B to the D2D interface (for example, the D2D-Tx2) of the switch die 202-B.

In addition, it may be learned from the foregoing descriptions that, as shown in FIG. 9, in a same switch die 202, the MAC-Tx2 receives data from the MAC-Rx2 and the EB 402. Therefore, to avoid a conflict between data from the MAC-Rx2 and the EB 402, the second link 412 further includes a second buffer 52. The second buffer 52 is electrically connected to the MAC-Rx2, the MAC-Tx2, and the EB 402 of the switch die 202. The second buffer 52 is configured to buffer data that is sent by the MAC-Rx2 and the EB 402 in the same switch die 202 to the MAC-Tx2. In this way, data buffered in the second buffer 52 may be queued in the second buffer 52 in a FIFO manner, and sent to the MAC-Tx2.

Based on this, the network interface 30 of the switch die 202 provided in this embodiment of this application may include VSR-Rx configured to receive a signal and VSR-Tx configured to send a signal, as shown in FIG. 9. In addition, the switch die 202 further includes a third receive-end MAC interface (briefly referred to as MAC-Rx3 below) and a third transmit-end MAC interface (briefly referred to as MAC-Tx3 below). The MAC-Rx3 and the MAC-Tx3 may use the standard Ethernet protocol. In addition, the forwarding processing unit in the processor of the switch die 202 may include an upstream forwarding processing unit (ingress pipeline, IPP) and a downstream forwarding processing unit (egress pipeline, EPP) shown in FIG. 9.

The MAC-Rx3 is electrically connected to the network interface (for example, the VSR-Rx) and the IPP. The MAC-Rx3 is used as an interface at a data link layer to transmit data from the VSR-Rx to the IPP. The IPP is further electrically connected to the SWB 40. The IPP is configured to: obtain a destination address of data from the VSR-Rx based on a source address of the data, and write the data into a local SWB 40. Specifically, when receiving a packet, the VSR-Rx transmits the packet to the IPP by using the MAC-Rx3. When the switch die 202 performs layer-2 forwarding, the IPP may read a source MAC address in a packet header, then read a destination MAC address in the packet header, and search a MAC address table for an interface corresponding to the destination MAC address. Alternatively, when the switch die 202 performs layer-3 forwarding, the IPP may read a source IP address in a packet header, then read a destination IP address in the packet header, and search an IP address table for an interface corresponding to the destination MAC address.

In addition, as shown in FIG. 9, the EPP is electrically connected to the MAC-Tx3 and the SWB 40. The EPP is configured to: read data from the SWB 40, and send the data to the MAC-Tx3. When the switch die 202 performs layer-3 forwarding, the EPP needs to change the source MAC address and the destination MAC address in the packet header, to complete layer-2 encapsulation. In addition, the MAC-Tx3 is further electrically connected to the network interface (for example, the MR-Tx). The MAC-Tx3 is used as an interface at a data link layer to transmit data from the EPP to the MR-Tx.

For example, data exchange capacities of the IB 401 and the EB 402 in the SWB 40 of any switch die 202 in the switch 10 may be 12.8 Tbps (12.8 T for short in the figure). In this case, four IPPs may be disposed to be electrically connected to the IB 401, and four MAC-Rx3 are disposed. One MAC-Rx3 is electrically connected to one IPP, so that each lane of interface can process data with a capacity of 3.2 Tbps (3.2 T for short in the figure). Similarly, four EPPs are disposed to be electrically connected to the EB 402, and four MAC-Tx3 are disposed. One MAC-Tx3 is electrically connected to one EPP, so that each lane of interface can process data with a capacity of 3.2 Tbps (3.2 T for short in the figure).

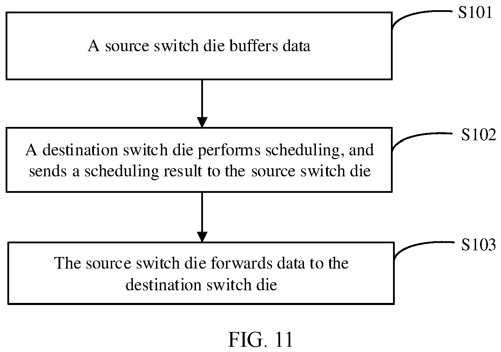

The following uses the structure of the switch 10 shown in FIG. 10a as an example to describe a data forwarding process of the switch die 202-A, the switch die 202-B, the switch die 202-C, and the switch die 202-D that are electrically connected sequentially one by one in the switch 10. The data forwarding process may include S101 to S103 shown in FIG. 11.

In some embodiments of this application, when data is forwarded in a same switch die such as the switch die 202-A in the switch 10, both a destination switch die and one of source switch dies are the switch die 202-A.

S101. The source switch die buffers data.

Specifically, the switch die 202-A shown in FIG. 9 is used as one of the source switch dies, and data output by each IPP of the switch die 202-A may be transmitted to the IB 401 of the switch die 202-A. The IB 401 may buffer data from a plurality of IPPs in a VOQ queue.

It should be noted that one VOQ queue in the IB 401 corresponds to one priority of one MAC-Tx3 of one switch die. For example, when the switch 10 includes four switch dies shown in FIG. 4, each switch die has 32 MAC-Tx3, and each MAC-Tx3 has eight priorities, 1024 (4×32×8=1024) VOQ queues may be set in the IB 401 of each switch die.

S102. The destination switch die performs scheduling, and sends a scheduling result to the source switch die.

Specifically, when the switch die 202-A is used as a source switch die, the IB 401 of the switch die 202-A sends a scheduling request to the EB 402 of the switch die 202-A. When the switch die 202-A is used as a destination switch die, the EB 402 of the switch die 202-A receives the scheduling request sent by the IB 401 of the switch die 202-A. In addition, the EB 402 of the switch die 202-A may further receive a scheduling request sent by the IB 401 of another source switch die such as the switch die 202-B, the switch die 202-C, and the switch die 202-D to the EB 402 of the switch die 202-A by using the foregoing transmission link 41 (as shown in FIG. 9). The EB 402 of the switch die 202-A generates a plurality of scheduling results based on a bandwidth (for example, 12.8 T), to perform scheduling, and send the scheduling result to the IB 401 of each source switch die.

It should be noted that, that the EB 402 of the destination switch die generates a plurality of scheduling results based on a bandwidth (for example, 12.8 T), and sends the scheduling result to the IB 401 of each source switch die means that the scheduling request received by the EB 402 of the destination switch die may be greater than the bandwidth (for example, 12.8 T), and a sending capability of the EB 402 is only 12.8 T. Therefore, the scheduling result sent by the EB 402 each time is not greater than 12.8 T, and a part exceeding the bandwidth is sent in batches in the EB 402.

S103. The source switch die forwards data to the destination switch die.

Specifically, after the IB 401 of the switch die 202-A used as a source switch die receives the scheduling result sent by the EB 402 of the switch die 202-A used as a destination switch die, the IB 401 of the switch die 202-A may dequeue a packet from the VOQ queue of the IB 401 based on the scheduling result, and send the packet to the EB 402 of the switch die 202-A. The EB 402 may send the packet to a corresponding MAC-Tx3 by using the EPP, and finally send, by using the MR-TX, the packet to an electronic device 11 electrically connected to the MR-TX, to complete data forwarding.

Based on this, to avoid a conflict between data sent by the EB 402 to a same MAC-Tx3, the EB 402 of the switch die 202 may further buffer, in a FIFO manner based on the scheduling result, data sent to a same MAC-Tx3.

The foregoing is described by using an example in which data is forwarded in a same switch die such as the switch die 202-A in the switch 10. In another embodiment of this application, in a data forwarding process of the switch 10, when the switch die 202-A forwards data to the switch die 202-B adjacent to the switch die 202-A, the switch die 202-A may be used as one of the source switch dies, and the switch die 202-B is used as a destination switch die.

In this case, the data forwarding process of the switch 10 is still shown in FIG. 11. Specifically, S101 is first performed, so that data output by each IPP of the switch die 202-A can be buffered in a plurality of VOQ queues of the IB 401 of the switch die 202-A used as a source switch die. In this case, the IB 401 of the switch die 202-A used as a source switch die may determine one sending path, and the sending path may include a path from the switch die 202-A used as a source switch die to the switch die 202-B used as a destination switch die.

Next, in a process of performing S102, the IB 401 of the switch die 202-A that is shown in FIG. 10a and that is used as a source switch die sends, by using the first link 411 (a solid-line arrow in FIG. 10a), a scheduling request to the EB 402 of the switch die 202-B used as a destination switch die. The EB 402 of the switch die 202-B receives the scheduling request sent by the IB 401 of the switch die 202-A. In addition, the EB 402 of the switch die 202-B may further receive a scheduling request sent by the IB 401 of another source switch die such as the switch die 202-B, the switch die 202-C, and the switch die 202-D to the EB 402 of the switch die 202-B by using the first link 411 or the second link 412. The EB 402 of the switch die 202-B used as a destination switch die generates a plurality of scheduling results based on a bandwidth (for example, 12.8 T), and sends the scheduling result to the IB 401 of each source switch die.

Subsequently, the foregoing S103 is performed. After the IB 401 of the switch die 202-A used as a source switch die receives the scheduling result sent by the EB 402 of the switch die 202-B, the IB 401 of the switch die 202-A may dequeue a packet from the VOQ queue of the IB 401 based on the scheduling result, and may send the data to the EB 402 of the switch die 202-B by using the sending path and the first link 411. The data dequeued by the IB 401 of the switch die 202-A may be sent to the first buffer 51 of the switch die 202-A by using the EB 402 of the switch die 202-A. In this case, when data received by the MAC-Rx1 of the switch die 202-A is also sent to the first buffer 51, the first buffer 51 may buffer the data in a FIFO manner, and output the data to the MAC-Tx1 of the switch die 202-A.

Then, the switch die 202-B electrically connected to the MAC-Tx1 of the switch die 202-A sends received data to the EB 402 of the switch die 202-B by using the MAC-Rx1 of the switch die 202-B, and the EB 402 may send, by using the EPP, the packet to the MAC-Tx3 corresponding to the switch die 202-B, or perform one time of buffering in the EB 402 of the switch die 202-B.

Alternatively, in another embodiment of this application, in a data forwarding process of the switch 10, when the switch die 202-A forwards data to the switch die 202-C, the switch die 202-A may be used as one of the source switch dies, and the switch die 202-C is used as a destination switch die. In this case, as shown in FIG. 10b, when data is transmitted in a first direction (for example, clockwise), the switch die 202-A and the switch die 202-C are spaced apart by the switch die 202-B used as a first intermediate switch die. Alternatively, when data is transmitted in a second direction (for example, counterclockwise), the switch die 202-A and the switch die 202-C are spaced apart by the switch die 202-D used as a second intermediate switch die.

In this case, the data forwarding process of the switch 10 is still shown in FIG. 11. Specifically, S101 is first performed, so that data output by each IPP of the switch die 202-A can be buffered in a plurality of VOQ queues of the IB 401 of the switch die 202-A used as a source switch die. In this case, the IB 401 of the switch die 202-A used as a source switch die may determine a first sending path, and the first sending path may include a path from the switch die 202-A used as a source switch die to the switch die 202-B used as a destination switch die through the switch die 202-B used as the first intermediate switch die.

Next, in a process of performing S102, the IB 401 of the switch die 202-A that is shown in FIG. 10a and that is used as a source switch die sends a scheduling request to the EB 402 of the switch die 202-C through the switch die 202-B by using the first link 411 (a solid-line arrow in FIG. 10a).

Then, the EB 402 of the switch die 202-C used as a destination switch die receives the scheduling request sent by the IB 401 of the switch die 202-A. In addition, the EB 402 of the switch die 202-C may further receive a scheduling request sent by the IB 401 of another source switch die such as the switch die 202-B, the switch die 202-C, and the switch die 202-D to the EB 402 of the switch die 202-C by using the first link 411 or the second link 412. The EB 402 of the switch die 202-C generates a plurality of scheduling results based on a bandwidth, and sends the scheduling result to the IB 401 of each source switch die.

Subsequently, S103 is performed. After the IB 401 of the switch die 202-A used as a source switch die receives the scheduling result sent by the EB 402 of the switch die 202-C, the IB 401 of the switch die 202-A may dequeue a packet from the VOQ queue of the IB 401 based on the scheduling result, and send the data to the EB 402 of the switch die 202-C through the switch die 202-B by using the first sending path and the first link 411 (a solid-line arrow in FIG. 10a).

Alternatively, in some other embodiments of this application, S101 is performed. The IB 401 of the switch die 202-A may determine a second sending path. The second sending path may be a path from the switch die 202-A to the switch die 202-B used as a destination switch die through the switch die 202-D used as the second intermediate switch die. A data sending process is the same as the foregoing process. Details are not described herein again.

Alternatively, in some other embodiments of this application, S101 is performed, and the IB 401 of the switch die 202-A used as a source switch die may determine both a first sending path and a second sending path. Next, in a process of performing S102, the IB 401 of the switch die 202-A that is shown in FIG. 10a and that is used as a source switch die sends a scheduling request to the EB 402 of the switch die 202-C through the switch die 202-B by using the first link 411 (a solid-line arrow in FIG. 10a). Alternatively, the IB 401 of the switch die 202-A may send the scheduling request to the EB 402 of the switch die 202-C through the switch die 202-D by using the second link 412 (a dashed-line arrow in FIG. 10a).

Then, the EB 402 of the switch die 202-C used as a destination switch die receives the scheduling request sent by the IB 401 of the switch die 202-A. In addition, the EB 402 of the switch die 202-C may further receive a scheduling request sent by the IB 401 of another source switch die such as the switch die 202-B, the switch die 202-C, and the switch die 202-D to the EB 402 of the switch die 202-C by using the first link 411 or the second link 412. The EB 402 of the switch die 202-C generates a plurality of scheduling results based on a bandwidth, and sends the scheduling result to the IB 401 of each source switch die.

Subsequently, S103 is performed. After the IB 401 of the switch die 202-A used as a source switch die receives the scheduling result sent by the EB 402 of the switch die 202-C, the IB 401 of the switch die 202-A may dequeue a packet from the VOQ queue of the IB 401 based on the scheduling result; send a part of the data to the EB 402 of the switch die 202-C through the switch die 202-B by using the first sending path and the first link 411 (a solid-line arrow in FIG. 10a); and in addition, send another part of the data to the EB 402 of the switch die 202-C used as a destination switch die through the switch die 202-D by using the second sending path and the second link 412 (a solid-line arrow in FIG. 10a). A function of the second buffer 52 in the second link 412 can be obtained in a manner similar to that of a function of the first buffer 51. Details are not described herein again.

Next, the EB 402 of the switch die 202-C may send, by using the EPP, the packet to the MAC-Tx3 corresponding to the switch die 202-C, or perform one time of buffering in the EB 402 of the switch die 202-C.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-die package structure, comprising a package substrate and a plurality of switch dies disposed on the package substrate, wherein the switch die comprises at least two network interfaces and at least one die-to-die, D2D, interface;
the switch die is configured to: access a network by using the at least two network interfaces, and send data to or receive data from the network;
the switch die is further configured to: be connected to another switch die by using each D2D interface in the at least one D2D interface, and transfer data between each other; and
the switch die is further configured to forward, to at least one interface in the at least two network interfaces and the at least one D2D interface, data received from the at least two network interfaces or the at least one D2D interface.

2. The die package structure according to claim 1, wherein the switch die further comprises control logic, and the control logic is used to:
obtain destination information of received data from the received data;
determine a sending port based on the destination information, wherein the sending port comprises the at least one D2D interface and the at least two network interfaces in the current switch die; and
send the received data by using the sending port.

3. The die package structure according to claim 2, wherein the plurality of switch dies comprise a source switch die and a destination switch die;
after the source switch die determines the sending port based on the destination information, the control logic of the source switch die is further used to: determine at least one sending path between the source switch die and the destination switch die, queue and buffer the received data, and send a scheduling request to the destination switch die; and
before the destination switch die sends the received data by using the sending port, the control logic of the destination switch die is further used to: generate a scheduling result based on the scheduling request and a bandwidth of the destination switch die; and the control logic of the source switch die is further used to: dequeue the received data from a queue based on the scheduling result, and send the received data to the destination switch die by using the at least one sending path.

4. The die package structure according to claim 3, wherein the multi-die package structure comprises four switch dies, each switch die comprises two D2D interfaces configured to be separately connected to D2D interfaces of two other switch dies, and the four switch dies are electrically connected sequentially one by one.

5. The die package structure according to claim 4, wherein the source switch die is adjacent to the destination switch die; and
the control logic of the source switch die is specifically used to: determine one sending path, and send the received data to the destination switch die by using the sending path, wherein the sending path comprises a path from the source switch die to the destination switch die.

6. The die package structure according to claim 4, wherein in the four switch dies, the source switch die and the destination switch die are spaced apart by one intermediate switch die; and
the control logic of the source switch die is specifically used to: determine one sending path, and send the received data to the destination switch die by using the sending path, wherein the sending path comprises a path from the source switch die to the destination switch die through the intermediate switch die.

7. The die package structure according to claim 4, wherein in the four switch dies, the source switch die and the destination switch die are spaced apart by a first intermediate switch die in a first direction, and the source switch die and the destination switch die are spaced apart by a second intermediate switch die in a second direction, wherein the first direction is opposite to the second direction; and
the control logic of the source switch die is specifically used to: determine a first sending path, and send a part of the received data to the destination switch die by using the first sending path, wherein the first sending path comprises a path from the source switch die to the destination switch die through the first intermediate switch die; and
determine a second sending path, and send another part of the received data to the destination switch die by using the second sending path, wherein the second sending path comprises a path from the source switch die to the destination switch die through the second intermediate switch die.

8. The die package structure according to any one of claims 4 to 7, wherein the switch die further comprises:
a switch buffer unit, configured to execute the control logic; and
a transmission link, wherein the transmission link is electrically connected to the D2D interface and the switch buffer unit, and the transmission link is configured to send/receive data between the D2D interface and the switch buffer unit and between different D2D interfaces.

9. The multi-die package structure according to claim 8, wherein the transmission link comprises:
a first link, wherein the first link comprises a first receive-end media access control MAC interface, a first buffer, and a first transmit-end MAC interface that are electrically connected sequentially, the first receive-end MAC interface and the first transmit-end MAC interface are separately electrically connected to the two D2D interfaces of the switch die, and the first receive-end MAC interface and the first buffer are further electrically connected to the switch buffer unit; and
a second link, wherein a transmission direction of data in the second link is opposite to a transmission direction of data in the first link, the second link comprises a second receive-end MAC interface, a second buffer, and a second transmit-end MAC interface that are electrically connected sequentially, the second receive-end MAC interface and the second transmit-end MAC interface are separately electrically connected to the two D2D interfaces of the switch die, and the second receive-end MAC interface and the second buffer are further electrically connected to the switch buffer unit.

10. The multi-die package structure according to claim 9, wherein the four switch dies are arranged in a form of a 2×2 matrix, and in the multi-die package structure, the first links of the four switch dies are electrically connected sequentially one by one in a ring shape, and the second links of the four switch dies are electrically connected sequentially one by one in a ring shape.

11. The multi-die package structure according to claim 2, wherein the switch die further comprises:
a forwarding processing unit, configured to execute the control logic;
a third receive-end MAC interface, electrically connected to the network interface and the forwarding processing unit, and configured to transmit data from the network interface to the forwarding processing unit; and
a third transmit-end MAC interface, electrically connected to the network interface and the forwarding processing unit, and configured to transmit data from the forwarding processing unit to the network interface.

12. The multi-die package structure according to claim 1, wherein in the multi-die package structure, switch bandwidths of any two switch dies are the same.

13. The multi-die package structure according to any one of claims 1 to 12, wherein the multi-die package structure further comprises a plurality of optical modules that are disposed on the package substrate and that are on a same side as the switch die.

14. A switch, comprising a circuit board and the multi-die package structure that is disposed on the circuit board and that is according to any one of claims 1 to 13.
